# EUROPEAN PATENT APPLICATION

(11) **EP 1 145 819 A2**
(43) Date of publication of application: **17.10.2001**
(21) Application number: 01100751.5
(22) Date of filing: 12.01.2001
(51) Int. Cl.: B29C 47/10

(54) **A mixing machine**

(30) Priority: 08.03.2000 IT PR000013
(71) Applicant: Valesi, Silvio, 43036 Fidenza (Parma) (IT)
(72) Inventor: Valesi, Silvio, 43036 Fidenza (Parma) (IT)

(57) **Abstract**

A mixing machine (1) comprises a base structure (2), a mixing tub (3) actuated by motorization (5) mounted on said base structure (2) and an extrusion device (7) mounted on said base structure (2) and provided with a metering screw (8) and with a contrast roller (9) set side by side with parallel longitudinal axes (11, 12) and operatively connected to said motorization (5). The metering screw (8) has an external delimitation surface that is substantially tangential to the lateral surface of the contrast roller (9). The extrusion device (7) comprises a frame (10) provided with fixing means (15) for locking the extrusion device (7) relative to the base structure (2).

## Description

The present invention relates to a mixing machine.

As is well known, mixing machines are provided with a mixing tub in which the mixture is obtained. The latter can be compact or shredded.

The shredded mixture can be used to feed metering screw extruders without impediments whilst compact mixtures are commonly used to obtain a foil through a series of lamination rollers.

The use of compact mixtures to feed extruders is rather limited since it requires particular presser devices which press the mixture towards the metering screw of the extruder.

The presence of the presser devices makes the extruder complex and costly.

Moreover, in the case of mixing machines that produce compact mixtures, the laminating rollers are housed inside the same structure that sustains the mixing tub. Generally, the motorization that actuates the mixing tub also feeds the lamination rollers.

The mixing machines thus obtained are commonly called mixing-laminating machines because they produce the mixture and work it in the form of a foil.

The laminating rollers are fed manually, drawing the mixture from the mixing tub and pressing it between the first pair of laminating rollers.

During the phase in which the mixture is pressed between the two rollers, the operator is subjected to considerable hazards and unfortunately there are frequent accidents in which the extremities of the upper limbs can be crushed between the laminating rollers.

To prevent such a drawback, a machine is known in which, in proximity to the area wherein the mixture is introduced between two laminating rollers, a safety bar is provided. The operator, actuating the bar with his/her body, stops the rollers and inverts their direction of rotation.

Such machines do not prevent accidents but merely limit the extent of the injuries.

The aim of the present invention is to eliminate the aforesaid drawbacks, making available a mixing machine associated to an extruder able to receive compact mixtures to feed drawing machines located downstream of the extruder itself.

A further aim of the present invention is to prevent the operator from coming in contact with the area where the mixture is introduced between the laminating rollers, in order to enhance workplace safety.

Said aims are fully achieved by the mixing machine of the present invention, which is characterised by the contents of the claims set out below and in particular in that it comprises an extrusion device mounted on a base structure of the mixing machine and provided with a metering screw and with a contrast roller set side by side with parallel longitudinal axes and operatively connected to the motorization of the mixing machine. This and other features shall become more readily apparent from the following description of a preferred embodiment illustrated, purely by way of non limiting example, in the accompanying drawing tables, in which:
- Figure 1 shows a lateral section view of a mixing machine;
- Figure 2 shows a top view of the mixing machine of Figure 1;

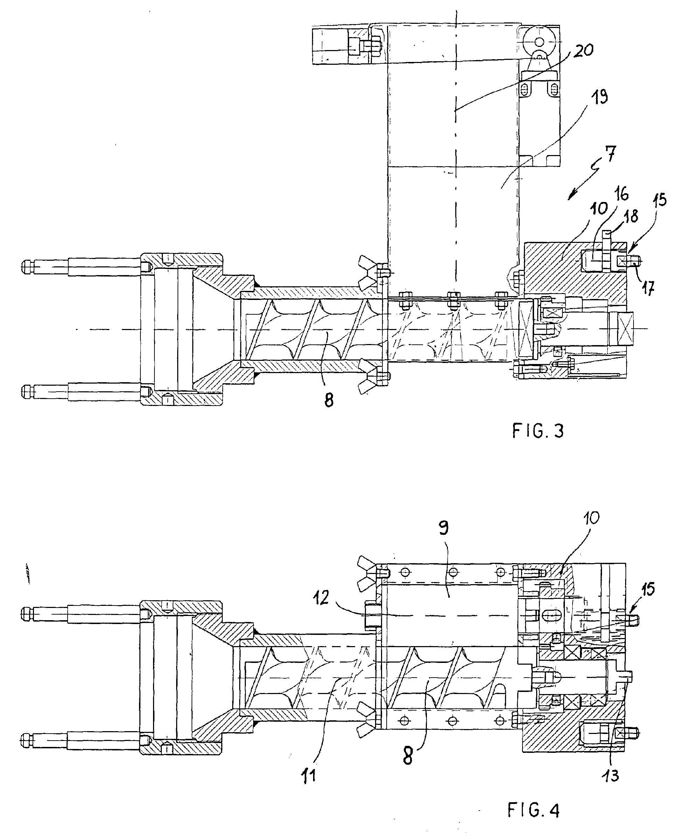

- Figure 3 shows a lateral section view of an extrusion device able to be associated to the mixing machine of Figure 1;
- Figure 4 shows a top view of the device of Figure 3.

With reference to the figures, the number 1 globally indicates a mixing machine, commonly also called mixing-laminating machine.

The machine is composed of a base structure 2 defining a protective case for the operating mechanisms. On the base structure 2 is mounted a mixing tub 3, of substantially known type, inside which is provided a tool 4 for producing a compact mixture.

On the base structure 2 is mounted a motorization 5 mechanically connected to the mixing tub 3 and to the tool 4; in particular, a vertical shaft 6 is provided, which is inserted internally to the mixing tub 5 and actuates the tool 4.

The mixing machine 1 originally comprises an extrusion device 7 mounted on the base structure 2 and provided with a metering screw 8 and with a contrast roller 9.

The metering screw 8 and the contrast roller 9 are housed inside a frame 10 in such a way as to be set side by side and with mutually parallel longitudinal axes, respectively indicated as 11 and 12. In particular the meter screw has an external delimitation surface substantially tangential to the lateral surface of the contrast roller 9. This original configuration allows to draw even compact mixtures through the extrusion device 7, since the mixture is pinched between the metering screw 8 and the contrast roller 9 to be thrust by the metering screw 8 towards drawing machines not shown herein and located downstream of the extrusion device.

Both the metering screw 8 and the contrast roller 9 are actuated by the motorization 5 whereto they are operatively connected. In particular the metering screw 8 has a coupling 13 which extends externally from the frame 10 to receive motion from a series of gears 14 housed in the base structure 2.

The frame 10 is advantageously provided with fixing means 15 for blocking the extrusion device relative to the base structure 2.

According to the illustrated embodiment the fixing means 15 comprises two pivot pins 16 whose threaded end 17 is screwed into the base structure 2, which are inserted into recesses 25 of the frame 10 where they are locked by locking/unlocking devices constituted by a rotating locking lever 18, which allows firmly to secure the frame 10 to the base structure 2, or vice versa, in the unlocked position, allows to extract the extrusion device relative to the base structure of the mixing machine. The locking lever 18 is associated to the frame 10 and extends externally thereto.

The fixing means also comprise the coupling 13 kinetically connected to the metering screw 8 and destined to be coupled with a drive 28 associated to the mixing machine for the transmission of motion from the mixing machine to the extrusion device.

The extrusion device 7 further comprises a channel 19 for introducing the mixture which faces the metering screw 8 and the lateral surface of the contrast roller 9. In particular the introduction channel 19 has a longitudinal axis 20 that is substantially perpendicular to a plane containing the longitudinal axes 11 and 12 of the contrast roller 9 and of the metering screw 8.

The mixing machine 1 further comprises a series of laminating rollers 21 mounted parallel and rotating on the base structure 2 to laminate the mixture into a foil. The laminating rollers 21 are actuated by the motorization 5 through a kinetic chain comprising also the series of gears 14.

In proximity with the area in which the mixture is introduced between the first two laminating rollers 21 is advantageously present a presser lid 22 associated to the base structure 2 to insert the mixture between the laminating rollers.

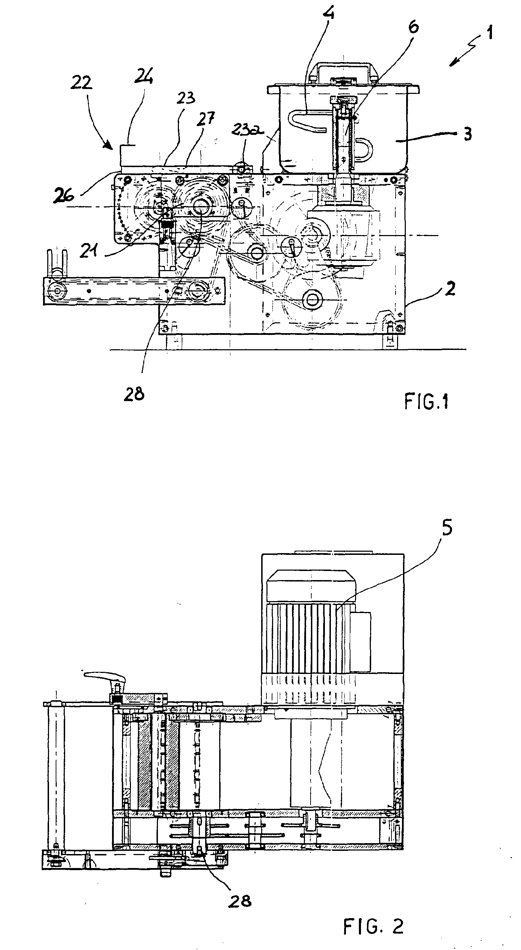

For this purpose, the presser lid 22 comprises a plane 23, having an end 23a pivotally engaged to the base structure 2. The plane 23 is thereby movable between a resting position in which it is raised relative to the base structure 2 and a working position in which it faces the laminating rollers directly, as shown in Figure 1.

The plane 23 also comprises a grip 24 that extends from the upper surface of the plane and one or more slots 27 preferably parallel to the axis of the laminating rollers 21.

When the presser lid 22 is in the closed position, the end opposite to the end 23a is positioned in such a way as to leave a slot 26 between the lid and the frame of the machine.

The operation of the mixing machine according to the present invention is a s follows.

Inside the mixing tub 3 a mixture in compact form is obtained. The mixture is subsequently worked by means of the extrusion device 7 and the successive drawing machines or by means of the laminating rollers 21.

In the first case, the mixture is introduced through the introduction channel 19 in such a way as to face the metering screw 8 and the contrast roller 9. The mixture is thus pinched between the metering screw and the contrast roller so that it can be driven by the metering screw towards the downstream drawing machines.

In the second case, the mixture is inserted between the laminating rollers 21 to be worked into a foil. The insertion is effected indirectly, positioning the mixture in proximity to the two rollers and thrusting it between them as a result of the pressure exerted by the presser lid. It should be specified that, for safety reasons, when the presser lid is in the raised, i.e. not horizontal, position, the operator is forced to press two push-buttons -not shown herein - in order to operate the rollers; said pushbuttons being positioned in such a way as to force the operator to have both hands busy and to prevent him/her from inserting his/her hands between the rollers.

When the presser lid is in the horizontal position, providing maximum safety, the rollers operate even if both of the aforesaid push-buttons are not pressed simultaneously. In this case a thin mixture (already partially laminated) can be introduced both through the slot 27 present on the presser lid and having width that is sufficient for the passage of the mixture but insufficient for the introduction of the operator's fingers, and through the slot 26 which remains present underneath the presser lid when the latter is in the horizontal position shown in Figure 1.

## Claims

1. A mixing machine (1), of the type comprising:
a base structure (2);
at least a mixing tub (3) mounted on said base structure (2);
at least a motorization (5) mounted on said base structure (2) and mechanically connected to said mixing tub (3),
**characterised in that** it comprises an extrusion device (7) mounted on said base structure (2) and provided with a metering screw (8) and with a contrast roller (9) set side by side with parallel longitudinal axes (11, 12) and operatively connected to said motorization (5).

2. A machine as claimed in claim 1, **characterised in that** said metering screw (8) has an external delimitation surface substantially tangential to the lateral surface of the contrast roller (9).

3. A machine as claimed in either of the previous claims, **characterised in that** said extrusion device (7) comprises a frame (10) provided with fixing means (15) for locking in a removable manner the extrusion device (7) relative to said base structure (2).

4. A machine as claimed in claim 3, **characterised in that** said fixing means (15) comprise:
- at least a pivot pin (16) inserted in a recess (25) of the frame (10) and presenting a threaded end (17) which is screwed into the base structure (2);
- a coupling (13) kinetically connected to the metering screw (8) which is inserted into a drive (28) presented by the base structure (2);
- means (18) for locking/unlocking the position of the pivot pin (16) in the recess (25).

5. A machine as claimed in claim 4, **characterised in that** said locking/unlocking means (15) comprise at least a locking lever (18) associated to the frame (10) and extending externally thereto.

6. A machine as claimed in any of the previous claims, **characterised in that** said extrusion device (7) comprises an inlet channel (19) having an end facing the metering screw (8) and the lateral surface of said contrast roller (9).

7. A machine as claimed in claim 6, **characterised in that** said inlet channel (19) has a longitudinal axis (20) substantially perpendicular to a plane containing the longitudinal axes (11, 12) of said contrast roller (9) and of said metering screw (8).

8. A mixing machine (1), of the type comprising:
a base structure (2);
a mixing tub (3) mounted on said base structure (2) for the production of a mixture;
at least a motorization (5) mounted on said base structure (2) and mechanically connected to said mixing tub (3);
at least two laminating rollers (21) mounted parallel and rotating on said base structure (2) to laminate the mixture in the form of a foil,
**characterised in that** it comprises a presser lid (22) associated to said base structure (2) and serving for the insertion of the mixture between the laminating rollers (21).

9. A machine as claimed in claim 8, wherein the presser lid (22) comprises a plane (23) pivotally engaged to said base structure (2) and movable at least between a resting position and a working position in which it presses on the mixture until it faces the laminating rollers directly (21).

10. A machine as claimed in claim 9, wherein said plane (23) comprises a grip (24) to move the operator's hands away from the area where the mixture is inserted between the laminating rollers (21).

11. A machine as claimed in claim 9, wherein the presser lid (22) presents at least a slot (26, 27) through which a mixture of reduced thickness can be inserted, in the form of a foil to be further laminated.
